# EUROPÄISCHE PATENTSCHRIFT

(11) **EP 0 427 041 B1**
(45) Veröffentlichungstag und Bekanntmachung des Hinweises auf die Patenterteilung: **15.03.1995**
(21) Anmeldenummer: 90120280.4
(22) Anmeldetag: 23.10.1990
(51) Int. Cl.: H02G 11/02

(54) **Kabelaufwickelvorrichtung**
Cable winding device
Dispositif d'enroulement de câble

(30) Priorität: 08.11.1989 DE 8913225 U; 11.12.1989 DE 8914558 U
(43) Veröffentlichungstag der Anmeldung: 15.05.1991
(73) Patentinhaber: Manfred Fladung GmbH, 63776 Mömbris (DE)
(72) Erfinder: Fladung, Manfred, D-8752 Mömbris (DE)
(74) Vertreter: Stoffregen, Hans-Herbert, Dr. Dipl.-Phys.

(56) Entgegenhaltungen:
- EP-A- 0 008 352
- EP-A- 0 163 025
- CH-A- 419 273
- DE-U- 8 914 558
- US-A- 1 725 308

## Beschreibung

Die Erfindung bezieht sich auf eine Kabelaufwickelvorrichtung zum Verstauen eines eine zentrale Bordnetzversorgungsanlage eines Flughafens mit einem Versorgungssteckeranschluß eines Flugzeugs verbindbaren Versorgungskabels, das über eine periphere Öffnung der trommelartig ausgebildeten Kabelaufwickelvorrichtung von dieser abrollbar oder auf diese aufrollbar ist, wobei das freie Ende des Versorgungskabels eine Steckereinheit mit Steuerfunktion aufweist.

Eine entsprechende Kabelaufwickelvorrichtung ist z.B. dem DE-U-83 03 469 oder der EP-A-0 163 025 zu entnehmen. Die entsprechenden Kabelaufwickelvorrichtungen können dabei mit vertikaler Achse unter dem Brückenkopf eines Gates bzw. einer teleskopartig aufgebauten Fluggastbrücke aufgehängt und mittels Motor zum Auf- bzw. Abrollen in die gewünschte Drehrichtung versetzt werden.

Die Kabelaufwickelvorrichtung der zuerst genannten Art weist eine Aufwickeltrommel und eine zu dieser koaxial angeordnete Ausgleichstrommel auf, die oberhalb der Aufwickeltrommel liegt. Eine solche Konstruktion ist aufwendig und birgt den gravierenden Nachteil in sich, daß von dem in der Kabelaufwickelvorrichtung vorhandenem Kabel nur die Hälfte genutzt, also abgerollt werden kann. Daher hat sich eine entsprechende Vorrichtung in der Praxis auch nicht bewährt.

Die Kabelaufwickelvorrichtung der EP-A-0 163 025 hat diese Nachteile vollständig ausgeräumt. Hierzu sind in einem sich in Achsrichtung der Aufhängevorrichtung bzw. -trommel erstreckenden Abschnitt Adern freiliegend angeordnet, die beim Abwickeln des Versorgungskabels von der Aufwickeltrommel unter Reduzierung der radialen Ausbauchung stärker und beim Aufwickeln unter Vergrößerung der radialen Ausbauchung schwächer spiralförmig verdreh- und verdrillbar sind. Hierdurch sind Ausgleichabschnitte und deren Anordnung in der Ausgleichstrommel nicht mehr erforderlich. Die aus der EP-A-0 163 025 bekannte Kabelaufwickelvorrichtung, die nicht nur unterhalb eines Gates, sondern auch unterflur anordbar ist, hat daher uneingeschränkte Anerkennung gefunden und ist somit umfassend zum Einsatz gelangt.

Trotz der entscheidenden Vorteile, die mit Kabelaufwickelvorrichtungen der eingangs genannten Art erzielbar sind, zeigt sich von Fall zu Fall der Nachteil, daß das mit der Steckereinheit versehene Kabelende im Bereich des Austritts aus der Kabelaufwickelvorrichtung bricht, da es dort pendelnd herabhängt.

Der US 1,725,308 ist eine selbstspannende Aufwickelrolle für elektrische Kabel zu entnehmen, um z.B. eine Lampe oder einen Zigarrenanzünder in einem Kraftfahrzeug mit Strom zu versorgen.

Aufgabe der vorliegenden Erfindung ist es daher, eine Kabelaufwickelvorrichtung der zuvor beschriebenen Art so weiterzubilden, daß sichergestellt ist, daß das Versorgungskabel bzw. dessen Adern im Bereich der Steckereinheit wie Panels nicht beschädigt werden, insbesondere nicht brechen kann.

Die Aufgabe wird erfindungsgemäß im wesentlichen dadurch gelöst, daß von der Kabelaufwickelvorrichtung ein das Versorgungskabel zumindest abschnittsweise umgebendes Führungselement ausgeht, dem ein von der Steckereinheit ausgehendes, den von der Steckereinheit ausgehenden Abschnitt des Versorgungskabels zumindest abschnittsweise umgebendes Zentrierelement zugeordnet ist.

Durch die erfindungsgemäße Konstruktion wird bei aufgerolltem Versorgungskabel der von der Steckereinheit ausgehende Abschnitt geführt von dem vorzugsweise als Rohrelement ausgebildeten Führungselement aufgenommen, so daß unkontrollierte Krafteinwirkungen, die nach dem Stand der Technik durch ein pendelndes Herabhängen auftreten, ausgeschlossen sind. Die Steckereinheit mit dem sich anschließenden Versorgungskabel bildet folglich eine starre Einheit, die geführt von dem Führungselement aufgenommen ist. Letzteres kann dabei selbst rohrförmig ausgebildet sein, wobei selbstverständlich der Außendurchmesser größer als der des Zentrierelementes ist.

Um beim Aufwickeln des Kabels zu gewährleisten, daß das Zentrierelement ohne Schwierigkeit in das Führungselement einbringbar ist, um also unkontrollierte Stöße oder ähnliches im Übergangsbereich von dem Versorgungskabel zum Zentrierelement auszuschließen, kann das Führungselement von einer die Öffnung der Kabelaufwickelvorrichtung umgebenden und zu dieser verstellbaren Halterung ausgehen. Diese Halterung kann gehäuseartig ausgebildet sein und z.B. über Langlöcher mit der Kabelaufwikkelvorrichtung verbunden sein. Hierdurch ergibt sich eine Verstellbarkeit, so daß folglich der Winkel, unter dem das Kabel in die Kabelaufwickelvorrichtung eingeführt wird, verstellt werden kann.

In hervorzuhebender und eigenerfinderischer Ausgestaltung ist vorgesehen, daß das Führungselement zumindest zweiteilig ausgebildet ist, wobei die Teile über ein elastisches Element wie Zugfeder verbunden sind. Hierdurch ist der Vorteil gegeben, daß sich der vordere Abschnitt noch weiter auf die Einzugsrichtung des Kabels ausrichten kann, wobei eine Voreinstellung über die das Führungselement aufnehmende Halterung erfolgen kann. Anstelle einer Zugfeder kann auch ein gleichwirkendes Element zum Einsatz gelangen.

Des weiteren ist vorgesehen, daß das Zentrierelement steckerseitig einen Flansch aufweist, an dem bei in dem Führungselement angeordnetem Zentrierelement der freie äußere Rand des Führungselementes anliegt.

Um das Einführen des Zentrierelementes in das Führungselement zu erleichtern, kann zumindest die Innengeometrie des freien äußeren Randes des Führungselementes trompetenartig erweitert sein und gegebenenfalls das freie äußere Ende des Zentrierelementes sich verjüngen.

Sowohl das Führungselement als auch das an der Steckereinheit angeflanschte Zentrierelement kann aus schlagfestem Kunststoff oder anderem geeigneten Material bestehen, wodurch Beschädigungen durch Schlageinwirkungen, Stöße oder ähnliches weitgehend ausgeschlossen sind.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine Seitenansicht des Kopfes einer teleskopierbaren Fluggastbrücke mit einer Kabelaufwickelvorrichtung,
- Fig. 2: eine Detaildarstellung einer Kabelaufwickelvorrichtung mit teilweise abgerolltem Versorgungskabel,
- Fig. 3: die Detaildarstellung nach Fig. 3, jedoch mit aufgerolltem Versorgungskabel und
- Fig. 4: eine der Fig. 3 entsprechende Darstellung mit weiter ausgestaltetem Führungselement.

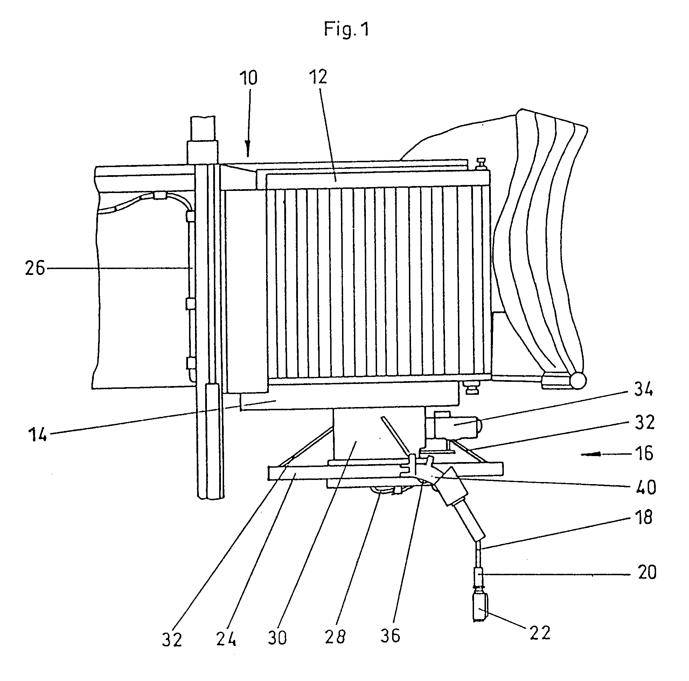

Eine teleskopierbare Fluggastbrücke (10), von der in Fig. 1 nur der vordere Teil dargestellt ist, umfaßt einen Kopf (12), an dessen Unterseite (14) eine Vorrichtung (16) zum Verstauen eines Versorgungskabels (18) einer zentralen Bordnetzversorgungsanlage für Flugzeuge befestigt ist. Die Kabelaufwickelvorrichtung (16) wird dabei zusammen mit der Fluggastbrücke (10) horizontal bzw. vertikal verschoben und in gewünschter Position festgelegt.

Das Versorgungskabel (18), von dem ein abgerollter Abschnitt mit dem Bezugszeichen (20) versehen ist und an dessen äußerem Ende eine rein prinzipiell dargestellte Steckereinheit (22) wie Steckverbinder angeordnet ist, wird von der als Trommel (24) ausgebildeten Kabelaufwickelrolle aufgenommen, wobei die Länge des Abschnittes (20) von dem Abstand zwischen dem Kopf (12) und dem zu versorgenden Flugzeug abhängt. Das Versorgungskabel wird über einen nicht dargestellten Anschlußkasten mit einem Verbindungskabelstück (26) verbunden, welches sich entlang der teleskopierbaren Fluggastbrücke (10) erstreckt.

Der Aufbau der Kabelaufwickelvorrichtung (16) kann dem der Europäischen Patentanmeldung EP-A-01630250 entsprechen. Dies bedeutet, daß das Kabel einen in die Drehachse der Trommel (24) umgelenkten Abschnitt (28) aufweist, der seinerseits in einen in dem Gehäuse verlaufenden Abschnitt von freiliegend spiralförmig angeordneten und beim Abwickeln des Versorgungskabels (18) unter Reduzierung einer radialen Ausdehnung stärker und beim Aufwickeln unter Vergrößerung der radial Ausdehnung schwächer spiralförmig verdrehbaren Adern übergeht.

Eine andere verdrillungsfreie Verbindungsart zwischen dem Versorgungskabel (18) und dem Abschnitt (26) über z.B. Schleifringe oder ähnliches ist selbstverständlich möglich.

Die das Versorgungskabel (18) aufnehmende Trommel (24) ist über Streben (32) mit dem Gehäuse (30) bzw. der Unterseite (14) des Kopfes (12) verbunden. Über einen Getriebemotor (34) ist die Kabelaufwickelvorrichtung (16) im oder entgegengesetzt dem Uhrzeigersinn drehbar, je nachdem, ob das Versorgungskabel (18) auf der Trommel (24) aufgewickelt oder von dieser abgezogen werden soll.

Um ein schonendes Einführen des Versorgungskabels (18), also des Abschnitts (20) über die Öffnung (40) in die Trommel (24) sicherzustellen, sind Abstützrollen (36) vorgesehen. Schließlich können peripher auf der Umfangsfläche der Trommel (24) Rollen zur Reduzierung der Reibung angeordnet sein, wie es beispielhaft der PCT/EP 86/00142 zu entnehmen ist.

Bei aufgerolltem Versorgungskabel (18) hängt bei den bekannten Kabelaufwickelvorrichtungen die Steckereinheit (22) frei herab, kann also eine unkontrollierte pendelnde Bewegung ausüben, wobei die Gefahr besteht, daß die Adern des Versorgungskabels brechen, wodurch ein Austausch des Versorgungskabels oder zumindest eine Verkürzung dieses erforderlich ist.

Im Bereich der Austrittsöffnung (40) der Kabelaufwickelvorrichtung (16), also dort, wo die Führungsrollen (36) zur Abstützung des Versorgungskabels (18) verlaufen, ist nun eine Halterung (42) für ein Rohrelement (44) vorgesehen, durch das das Versorgungskabel (18) aus der Kabelaufwickelvorrichtung (16) herausgezogen bzw. in diese eingebracht werden kann.

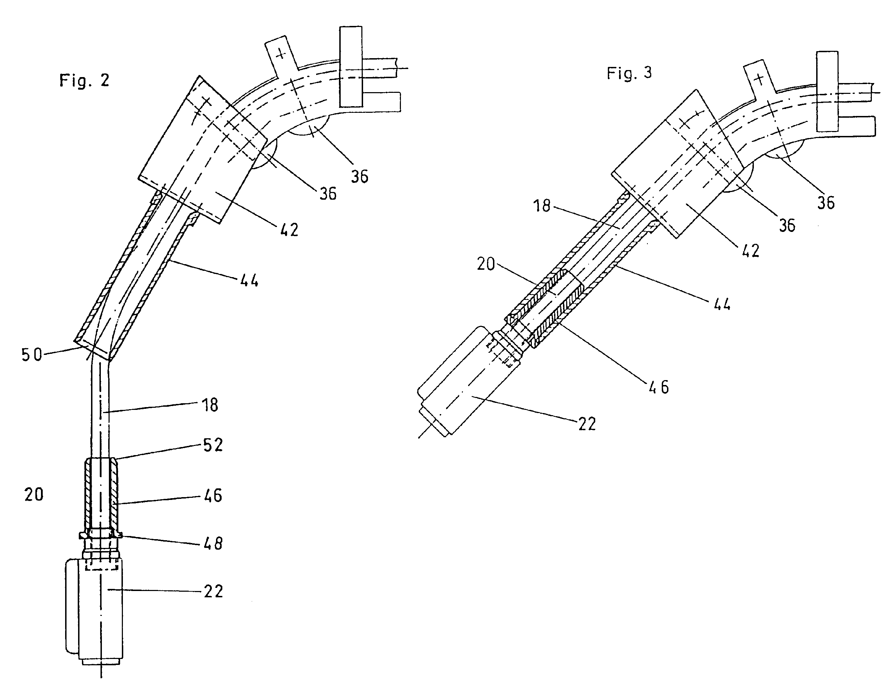

Dem auch als Führungselement zu bezeichnenden Rohr (44) ist ein ebenfalls rohrförmig ausgebildetes Zentrierelement (46) zugeordnet, das von der Steckereinheit (22), das als Panel ausgebildet sein kann, ausgeht. Dieses Zentrierelement (46) umgibt erkennbar das in die Steckereinheit (22) eingeführte Versorgungskabel (18), also den Abschnitt (20). Der Durchmesser des Zentrierelementes (46) ist kleiner als der Innendurchmesser des Führungselementes (44), um so -wie die Fig. 3 verdeutlicht- das Zentrierelement (46) bis zu einem Anschlag (48) in das Führungselement (44) bei aufgerolltem Versorgungskabel (18) einbringen zu können. Hierdurch wird eine starre Einheit aus Steckereinheit (22), Zentrierelement (46), Führungselement (44), Halterung (42) und der Trommel (24) gebildet, wodurch das Kabel (18), das innerhalb dieser starren Einheit verläuft, unkontrollierten Krafteinwirkungen nicht mehr ausgsetzt ist. Insbesondere kann bei nicht genutztem Versorgungskabel (18), also wenn es weitgehend auf der Kabelaufwickelvorrichtung (16) aufgewickelt ist, nicht mehr frei pendeln, so daß folglich auch die Adern des Versorgungskabels (18) geschützt sind.

Die zeichnerischen Darstellungen verdeutlichen des weiteren, daß die Halterung (42) gegenüber der Kabelaufwickelvorrichtung (16) verstellbar ist, um so den Einführungswinkel des Zentrierelementes (46) in das Führungselement (44) einstellen zu können. Hierdurch ist sichergestellt, daß beim Übergang von dem Versorgungskabel (18) zu dem Zentrierelement (46) keine stoßartigen Krafteinwirkungen auf das Versorgungskabel (18) im Bereich des freien Endes des Zentrierelementes (46) erfolgen.

Das Einführen des Zentrierelementes (46) in das Führungselement (44) wird des weiteren dadurch erleichtert, daß die Öffnung (50) des Führungselementes (44) zumindest innenwandig trompetenartig erweitert ist. Zusätzlich kann das vordere freie Ende (52) des Zentrierelementes (46) angefast sein.

Sowohl das Zentrierelement (46) als auch das Führungselement (44) kann mit der Steckereinheit (22) bzw. der Halterung (42) mit Schraubverbindungen lösbar verbunden sein. Die Halterung (42), die als rohrförmiges bzw. quaderförmiges Gehäuse ausgebildet sein kann, wird mit der Kabelaufwickelvorrichtung (16) über von dieser ausgehende Flacheisen verbunden, wobei die Verbindung selbst über Langlöcher erfolgt, um so den Neigungswinkel der Halterung (42) einstellen zu können.

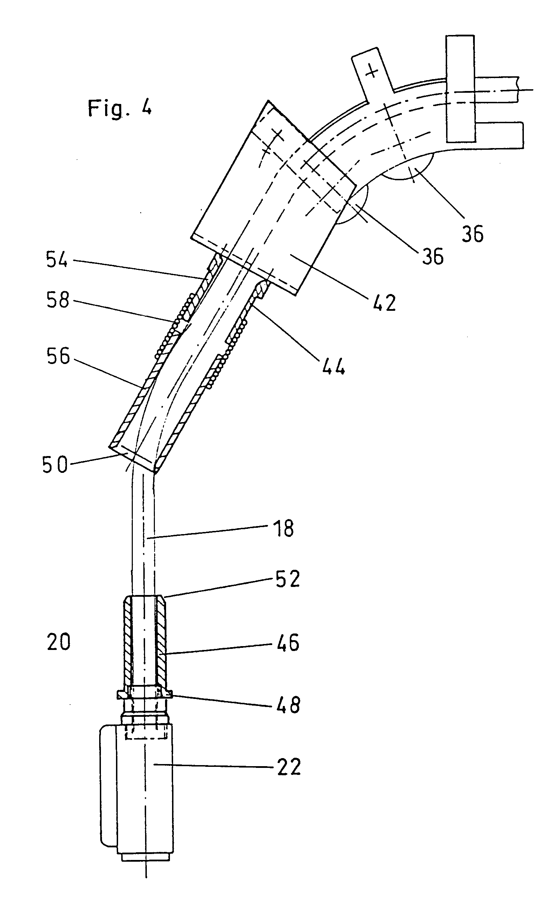

Der Fig. 4 ist eine besonders hervorzuhebende Weiterbildung des Führungselementes (44) zu entnehmen.

So ist das Führungselement in zwei Abschnitte, einen inneren Abschnitt (54) und einen äußeren Abschnitt (56) unterteilt, die zueinander beabstandet und durch ein flexibles Element wie Zugfeder (58) oder ähnliches miteinander verbunden sind. Hierdurch wird der Vorteil erzielt, daß der äußere Abschnitt (56) zu dem inneren Abschnitt (54) verschwenkbar ist, so daß der Kabeleinführungswinkel auf ein schonendes Einziehen des Kabels (18) ausrichtbar ist.

## Patentansprüche

1. Kabelaufwickelvorrichtung zum Verstauen eines eine zentrale Bordnetzversorgungsanlage eines Flughafens mit einem Versorgungssteckeranschluß eines Flugzeugs verbindbaren Versorgungskabels, das über eine periphere Öffnung der trommelartig ausgebildeten Kabelaufwickelvorrichtung von dieser abrollbar oder auf diese aufrollbar ist, wobei das freie Ende des Versorgungskabels eine Stekkereinheit (22) mit Steuerfunktionen aufweist,
**dadurch gekennzeichnet**,
daß von der Kabelaufwickelvorrichtung (16, 24) ein das Versorgungskabel (18) zumindest abschnittsweise umgebendes Führungselement (44) ausgeht, dem ein von der Steckereinheit (42) ausgehendes, den von der Steckereinheit ausgehenden Abschnitt (20) des Versorgungskabels (18) zumindest abschnittsweise umgebendes Zentrierelement (46) zugeordnet ist.

2. Kabelaufwickelvorrichtung nach Anspruch 1,
**dadurch gekennzeichnet**,
daß das Führungselement (44) ein Rohrelement ist.

3. Kabelaufwickelvorrichtung nach zumindest einem der vorhergehenden Ansprüche,
**dadurch gekennzeichnet**,
daß das Zentrierelement (46) ein zumindest bereichsweise von dem Führungselement (44) aufnehmbares Rohrelement ist.

4. Kabelaufwickelvorrichtung nach zumindest einem der vorhergehenden Ansprüche,
**dadurch gekennzeichnet**,
daß das Führungselement (44) von einer die Öffnung (40) der Kabelaufwickelvorrichtung (16, 24) umgebenden und zu dieser verstellbaren Halterung (42) ausgeht.

5. Kabelaufwickelvorrichtung nach zumindest einem der vorhergehenden Ansprüche,
**dadurch gekennzeichnet**,
daß das Zentrierelement (46) steckerseitig einen Flansch (48) aufweist, an dem bei im Führungselement (44) angeordnetem Zentrierelement (46) der freie äußere Rand des Führungselementes anliegt.

6. Kabelaufwickelvorrichtung nach zumindest einem der vorhergehenden Ansprüche,
**dadurch gekennzeichnet**,
daß die Öffnung (50) des Führungselementes zumindest innenseitig trompetenartig erweitert ist.

7. Kabelaufwickelvorrichtung nach zumindest einem der vorhergehenden Ansprüche,
**dadurch gekennzeichnet**,
daß sich das freie äußere Ende (52) des Zentrierelementes (46) verjüngt.

8. Kabelaufwickelvorrichtung nach zumindest einem der vorhergehenden Ansprüche,
**dadurch gekennzeichnet**,
daß das Führungselement (44) in zumindest einen inneren und einen äußeren Abschnitt (54, 56) unterteilt ist, die flexibel untereinander verbunden sind.

9. Kabelaufwickelvorrichtung nach Anspruch 8,
**dadurch gekennzeichnet**,
daß der innere und der äußere Abschnitt über ein Federelement wie Zugfeder (58) verbunden sind.

## Claims

1. A cable winding device for stowage of a supply cable provided to connect a central aircraft supply system of an airport to a supply plug connection of an aircraft, said supply cable being windable through a peripheral opening of the drum-type cable winding device off or onto said device, where the free end of said supply cable has a plug unit (22) with control functions,
**characterized in that**
a guide element (44) enclosing at least sections of said supply cable (18) extends from said cable winding device (16, 24) to which a centering element (46) is allocated extending from said plug unit (42) and surrounding at least in sections the section (20) of said supply cable (18) extending from said plug unit (42).

2. A cable winding device according to claim 1,
**characterized in that**
the guide element (44) is a tubular element.

3. A cable winding device according to at least one of the preceding claims,
**characterized in that**
the centering element (46) is a tubular element held at least in sections by the guide element (44).

4. A cable winding device according to at least one of the preceding claims,
**characterized in that**
the guide element (44) extends from a holding device (42) surrounding the opening (40) of said cable winding device (16, 24) and adjustable in relation to said device.

5. A cable winding device according to at least one of the preceding claims,
**characterized in that**
the centering element (46) has on the plug side a flange (48) with which the free outer edge of the guide element (44) is in contact when said centering element (46) is arranged in said guide element.

6. A cable winding device according to at least one of the preceding claims,
**characterized in that**
the opening (50) of the guide element is flared out at least on the inside.

7. A cable winding device according to at least one of the preceding claims,
**characterized in that**
the free outer end (52) of the centering element (46) is tapered.

8. A cable winding device according to at least one of the preceding claims,
**characterized in that**
the guide element (44) is divided into at least one inner and one outer section (54, 56) which are flexibly connected to one another.

9. A cable winding device according to claim 8,
**characterized in that**
the inner and the outer sections are connected by a spring element such as a tension spring (58).

## Revendications

1. Dispositif d'enroulement de câble pour arrimer un câble d'alimentation qui peut relier l'installation centrale d'alimentation du réseau de bord d'un avion à une fiche de raccordement servant à l'alimentation d'un avion, câble que l'on peut dérouler par une ouverture périphérique du dispositif d'enroulement de câble constitué à la manière d'un tambour à partir du dispositif ou le câble peut s'y enrouler, l'extrémité libre du câble d'alimentation présentant une unité d'enfichage (22) avec des fonctions de commande, caractérisé en ce qu'un élément de guidage (44) entourant au moins de façon fragmentaire le câble d'alimentation (18) part du dispositif d'enroulement de câble, élément de guidage auquel est associé un élément de centrage (46) sortant de l'unité d'enfichage (42) entourant au moins de façon fragmentaire la section (20), sortant de l'unité d'enfichage, du câble d'alimentation (18).

2. Dispositif d'enroulement de câble selon la revendication 11, caractérisé en ce que l'élément de guidage (44) est un élément tubulaire.

3. Dispositif d'enroulement de câble selon au moins l'une des revendications précédentes, caractérisé en ce que l'élément de centrage (46) est un élément tubulaire qui peut être reçu au moins dans la zone par l'élément de guidage (44).

4. Dispositif d'enroulement de câble selon au moins l'une des revendications précédentes, caractérisé en ce que l'élément de guidage (44) sort d'une fixation (42) entourant l'ouverture (40) du dispositif d'enroulement de câble (16, 24) et pouvant se déplacer vers celle-ci.

5. Dispositif d'enroulement de câble selon l'une des revendications précédentes, caractérisé en ce que l'élément de centrage (46) présente du côté de la fiche une bride (48), sur laquelle, dans le cas de l'élément de centrage (46) disposé dans l'élément de guidage (44), repose sur le bord extérieur libre de l'élément de guidage.

6. Dispositif d'enroulement de câble selon au moins l'une des revendications précédentes, caractérisé en ce que l'ouverture (50) de l'élément de guidage est évasée au moins du côté intérieur à la manière d'une trompette.

7. Dispositif d'enroulement de câble selon au moins l'une des revendications précédentes, caractérisé en ce que l'extrémité extérieure libre (52) de l'élément de centrage (46) se rétrécit.

8. Dispositif d'enroulement de câble selon au moins l'une des revendications précédentes, caractérisé en ce que l'élément de guidage (44) est subdivisé en au moins une section intérieure et une section extérieure (54, 56), sections qui sont reliées entre elles de façon flexible.

9. Dispositif d'enroulement de câble selon la revendication 8, caractérisé en ce que la section intérieure et la section extérieur sont reliées par un élément élastique comme un ressort de traction (58).
